# EUROPÄISCHE PATENTANMELDUNG

(11) **EP 3 015 421 A1**
(43) Veröffentlichungstag der Anmeldung: **04.05.2016**
(21) Anmeldenummer: 15191818.2
(22) Anmeldetag: 28.10.2015
(51) Int. Cl.: B67D 7/14, A01G 25/14, B67D 7/34, B67D 7/68

(54) **BETRIEBSSTOFFVERBRAUCHSERFASSUNG**

(30) Priorität: 30.10.2014 DE 102014115784
(71) Anmelder: Cieslik, Adam, 88400 Biberach (DE); Hartwich, Waldemar, 88471 Laupheim (DE)
(72) Erfinder: Cieslik, Adam, 88400 Biberach (DE); Hartwich, Waldemar, 88471 Laupheim (DE)
(74) Vertreter: Meitinger, Thomas Heinz

(57) **Zusammenfassung**

Die Beschreibung umfasst ein System zur Versorgung von Betriebsmitteln mit Betriebsstoffen, wobei die Betriebsstoffe insbesondere Fluide sind, umfassend: einen Behälter 4 zur Abgabe des Betriebsstoffes und einen Tank 11 zur Aufnahme des Betriebsstoffes, wobei das System ein Mittel 1, 8 zur Kommunikation, insbesondere über das Fluid, zwischen Behälter 4 und Tank 11 aufweist.

## Beschreibung

### GEBIET DER ERFINDUNG

Die vorliegende Erfindung betrifft ein System zur Versorgung von Betriebsmitteln mit Betriebsstoffen.

### HINTERGRUND DER ERFINDUNG

Im Stand der Technik sind Betriebsstoffe, wie beispielsweise Bohrwasser oder Öle, bekannt, die benötigt werden, damit die Betriebsmittel, also die Produktionsmaschinen und -Anlagen eines Produktionsunternehmens, betriebsbereit sind.

### ZUSAMMENFASSUNG DER ERFINDUNG

Betriebsstoffe werden in der Produktion benötigt, um die Betriebsmittel funktionsfähig zu halten. Der Verbrauch an Betriebsstoffen kann einen erheblichen Kostenfaktor darstellen. Insbesondere wenn die Betriebsmittel defekt oder schlecht eingestellt sind, kann sich ein hoher Verbrauch und damit hohe Kosten ergeben.

Eine Aufgabe ist daher, eine Möglichkeit bereitzustellen, um den Verbrauch an Betriebsstoffen zu steuern und zu überwachen.

Als erste Ausführungsform der Erfindung wird ein System zur Versorgung von Betriebsmitteln mit Betriebsstoffen zur Verfügung gestellt, wobei die Betriebsstoffe insbesondere Fluide sind, umfassend: einen Behälter zur Abgabe des Betriebsstoffes und einen Tank zur Aufnahme des Betriebsstoffes, wobei das System ein Mittel zur Kommunikation, insbesondere über das Fluid, zwischen Behälter und Tank aufweist.

Durch eine Kommunikation der Betriebsmittel, beispielsweise Tanks und Behälter/Kannen, über die Betriebsstoffe kann sichergestellt werden, dass die richtigen Betriebsstoffe in die richtigen Betriebsmittel gelangen. Außerdem ist eine statistische Erhebung des jeweiligen Betriebsstoffverbrauchs möglich.

Als zweite Ausführungsform der Erfindung wird ein System zur Verfügung gestellt, umfassend: ein Mittel zum Befüllen eines Behälters und ein System nach einem der Ansprüche 1 bis 8, wobei das Mittel eine Vorrichtung zur Kontrolle des an den Behälter abzugebenden Fluids aufweist.

Durch eine Kontrolle wird sichergestellt, dass der Behälter das richtige Fluid in der richtigen Menge aufweist.

Beispielhafte Ausführungsformen werden in den abhängigen Ansprüchen beschrieben.

Gemäß einer beispielhaften Ausführungsform der Erfindung wird ein System zur Verfügung gestellt, wobei das Mittel zur Kommunikation ein RFID/NFC-Modul des Behälters und ein RFID/NFC-Transponder des Tanks umfasst.

In einer weiteren erfindungsgemäßen Ausführungsform wird ein System zur Verfügung gestellt, wobei der Behälter einen Durchflussmesser zur Messung des abgegebenen Betriebsstoffes und/oder eine Pumpe zum Herauspumpen des Betriebsstoffes aus dem Behälter aufweist.

Durch die Anordnung einer Förderpumpe kann ein gleichmäßiger Fluidfluss sichergestellt werden, wodurch eine Messung des Fluidstroms durch einen Durchflussmesser erleichtert wird.

Gemäß einem weiteren Ausführungsbeispiel der vorliegenden Erfindung wird ein System zur Verfügung gestellt, wobei die Kommunikation zur statistischen Auswertung des Betriebsstoffverbrauchs eines Betriebsmittels, zur Erkennung einer Störung des Betriebsmittels und/oder zur Erkennung der Reparaturbedürftigkeit des Betriebsmittels genutzt wird.

Gemäß einer beispielhaften Ausführungsform der Erfindung wird ein System zur Verfügung gestellt, wobei das System eine Ladestation zur Aufnahme des Behälters umfasst, wobei die Ladestation zur Aufladung eines Akkus des Behälters vorgesehen ist und/oder wobei die Ladestation zur Übertragung erfasster Daten über eine Kommunikationsschnittstelle via Wlan oder dergleichen geeignet ist und/oder wobei die Daten Verbrauchswerte der Betriebsmittel sind.

In einer weiteren erfindungsgemäßen Ausführungsform wird ein System zur Verfügung gestellt, wobei der Behälter einen Taster zur Aktivierung der Pumpe aufweist.

Gemäß einer beispielhaften Ausführungsform der Erfindung wird ein System zur Verfügung gestellt, wobei die Pumpe bei Erreichen eines vorbestimmten Füllstands des Tanks stoppt und/oder wobei die Pumpe nach Abgabe einer vorbestimmten Menge des Fluids stoppt.

Durch eine derartige Vorrichtung kann ein Bestimmen des Füllstands ermöglicht werden.

In einer weiteren erfindungsgemäßen Ausführungsform wird ein System zur Verfügung gestellt, wobei der Behälter ein Mittel zur Kontrolle des Fluids, das innerhalb des Behälters angeordnet ist, aufweist.

Hierdurch kann eine Kontrolle des Fluids nach Art und Menge eröffnet werden.

Als eine Idee der Erfindung kann angesehen werden, ein System zur Verfügung, das den Betriebsstoffverbrauch von Betriebsmitteln überwacht, analysiert und statistische Erhebungen ermöglicht. Hierzu wird ein Behälter zur Verfügung gestellt, der die Tanks von Betriebsmitteln auffüllen kann. Durch RFID/NFC-Module am Behälter und RFID/NFC-Transponder an den Tanks kann überwacht werden, ob das richtige Betriebsmittel in den richtigen Tank eingefüllt und welche Verbrauchswerte sich hierdurch ergeben.

Die einzelnen Merkmale können selbstverständlich auch untereinander kombiniert werden, wodurch sich zum Teil auch vorteilhafte Wirkungen einstellen können, die über die Summe der Einzelwirkungen hinausgehen.

### KURZE BESCHREIBUNG DER ZEICHNUNGEN

Weitere Einzelheiten und Vorteile der Erfindung werden anhand der in den Zeichnungen dargestellten Ausführungsbeispiele deutlich. Es zeigen
Fig. 1 einen Behälter zur Aufnahme eines Betriebsstoffes mit einem RFID/NFC-Modul zur Verbrauchsüberwachung und
Fig. 2 mehrere Tanks, die unterschiedlichen Kostenstellen 3485, 6846, 2139 zugeordnet sind, und die zur Aufnahme eines Betriebsstoffes geeignet sind.

### DETAILLIERTE BESCHREIBUNG BEISPIELHAFTER AUSFÜHRUNGSFORMEN

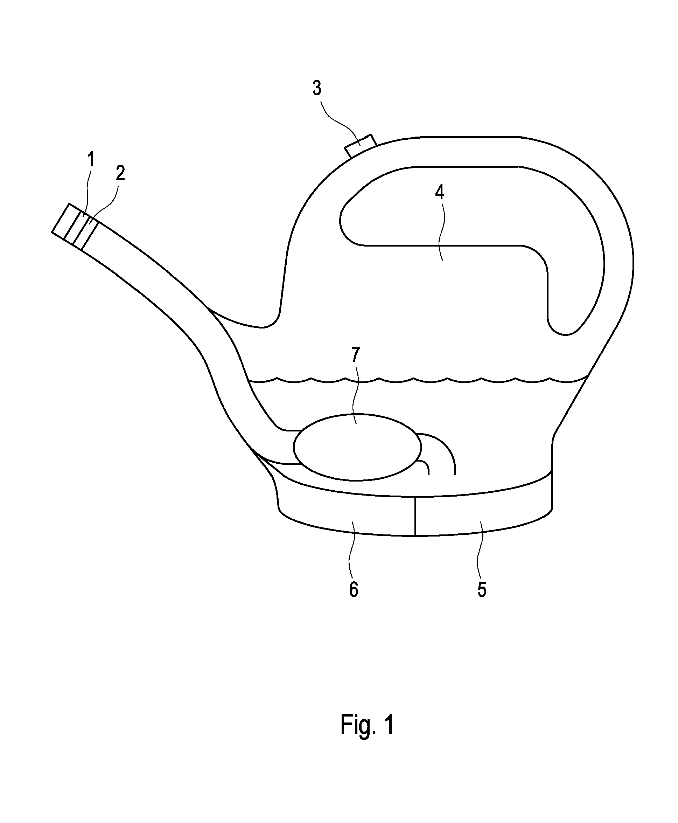

Fig. 1 zeigt einen Behälter 4 zur Aufnahme eines Betriebsstoffes, insbesondere eines Fluids, beispielsweise Bohrwasser oder Öl. Der Behälter 4 dient der Abgabe des Fluids beispielsweise an Tanks von Maschinen bzw. Betriebsmitteln, die zum Betrieb dieses Fluid benötigen. Das Fluid kann durch eine Pumpe 7 befördert werden, wobei durch ein RFID/NFC-Modul 1 des Behälters 4 mit einem RFID/NFC-Transponder 8 eines zu befüllenden Tanks abgestimmt werden kann, ob das Fluid des Behälters 4 tatsächlich in den Tank gelangen soll und in welcher Menge. Hierdurch kann sichergestellt werden, dass der richtige Tank mit dem richtigen Fluid befüllt wird. Außerdem kann erhoben werden, welche Mengen in den Tank gelangt sind. Der Verbrauch des Fluids, insbesondere bezüglich einzelner Betriebsmittel/Maschinen, lässt sich auf diese Weise bestimmen. Ergibt sich beispielsweise ein außergewöhnlich hoher Verbrauch eines Betriebsmittels/einer Maschine, kann ein Problem, ein Defekt, eine Fehleinstellung bzw. eine Störung des entsprechenden Betriebsmittels angenommen werden. Durch die Betätigung eines Tasters 3 kann die Pumpe 7 gestartet werden.

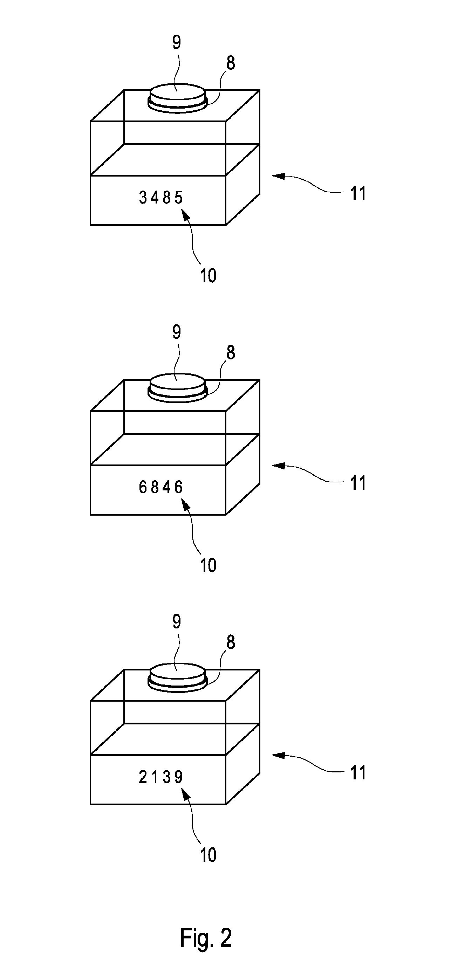

Fig. 2 zeigt unterschiedliche Tanks mit RFID/NFC-Transponder 8 zum Abgleich mit RFID/NFC-Modulen entsprechender Behälter. Unterschiedliche Tanks können unterschiedlichen Kostenstellen zugeordnet werden, wodurch eine statistische Auswertung der entsprechenden Verbrauchswerte der Betriebsmittel innerhalb einer betriebswirtschaftlichen Kostenrechnung ermöglicht wird.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

### LISTE DER BEZUGSZEICHEN

- 1: RFID/NFC-Modul
- 2: Durchflussmesser
- 3: Taster
- 4: Behälter
- 5: Akku
- 6: Steuereinheit/Datenerfassung
- 7: Pumpe
- 8: RFID/NFC-Transponder
- 9: Deckel 10 Kostenstelle
- 11: Tank

## Patentansprüche

1. System zur Versorgung von Betriebsmitteln mit Betriebsstoffen, wobei die Betriebsstoffe insbesondere Fluide sind, umfassend:
einen Behälter (4) zur Abgabe des Betriebsstoffes und
einen Tank (11) zur Aufnahme des Betriebsstoffes,
**dadurch gekennzeichnet, dass**
das System ein Mittel (1, 8) zur Kommunikation, insbesondere über das Fluid, zwischen Behälter (4) und Tank (11) aufweist.

2. System nach Anspruch 1, **dadurch gekennzeichnet, dass** das Mittel (1, 8) zur Kommunikation ein RFID/NFC-Modul des Behälters (4) und ein RFID/NFC-Transponder des Tanks (11) umfasst.

3. System nach einem der Ansprüche 1 oder 2, **dadurch gekennzeichnet, dass** der Behälter (4) einen Durchflussmesser zur Messung des abgegebenen Betriebsstoffes und/oder eine Pumpe (7) zum Herauspumpen des Betriebsstoffes aus dem Behälter (4) aufweist.

4. System nach einem der vorhergehenden Ansprüche, **dadurch gekennzeichnet, dass** die Kommunikation zur statistischen Auswertung des Betriebsstoffverbrauchs eines Betriebsmittels, zur Erkennung einer Störung des Betriebsmittels und/oder zur Erkennung der Reparaturbedürftigkeit des Betriebsmittels genutzt wird.

5. System nach einem der vorhergehenden Ansprüche, **dadurch gekennzeichnet, dass** das System eine Ladestation zur Aufnahme des Behälters (4) umfasst, wobei die Ladestation zur Aufladung eines Akkus des Behälters (4) vorgesehen ist und/oder wobei die Ladestation zur Übertragung erfasster Daten über eine Kommunikationsschnittstelle via Wlan oder dergleichen geeignet ist und/oder wobei die Daten Verbrauchswerte der Betriebsmittel sind.

6. System nach einem der vorhergehenden Ansprüche, **dadurch gekennzeichnet, dass** der Behälter (4) einen Taster (3) zur Aktivierung der Pumpe (7) aufweist.

7. System nach einem der vorhergehenden Ansprüche, **dadurch gekennzeichnet, dass** die Pumpe (7) bei Erreichen eines vorbestimmten Füllstands des Tanks (11) stoppt und/oder wobei die Pumpe (7) nach Abgabe einer vorbestimmten Menge des Fluids stoppt.

8. System nach einem der vorgehenden Ansprüche, **dadurch gekennzeichnet, dass** der Behälter (4) ein Mittel zur Kontrolle des Fluids, das innerhalb des Behälters (4) angeordnet ist, aufweist.

9. System umfassend:
ein Mittel zum Befüllen eines Behälters (4) und
ein System nach einem der vorhergehenden Ansprüche,
**dadurch gekennzeichnet, dass**
das Mittel eine Vorrichtung zur Kontrolle des an den Behälter (4) abzugebenden Fluids aufweist.
